Europäisches Patentamt

European Patent Office

Office européen des brevets

(19)

(11) Veröffentlichungsnummer: **0 102 914**
**B1**

# EUROPÄISCHE PATENTSCHRIFT

(45) Veröffentlichungstag der Patentschrift:
02.04.86

(21) Anmeldenummer: 83710051.0

(22) Anmeldetag: 30.07.83

(51) Int. Cl.⁴: **F 16 B 13/08, E 21 D 21/00**

(54) Ankerbolzen.

(30) Priorität: 09.08.82 DE 3229633

(43) Veröffentlichungstag der Anmeldung:
14.03.84 Patentblatt 84/11

(45) Bekanntmachung des Hinweises auf die Patenterteilung:
02.04.86 Patentblatt 86/14

(84) Benannte Vertragsstaaten:
AT BE CH DE FR GB IT LI LU NL SE

(56) Entgegenhaltungen:
EP - A - 0 019 782
EP - A - 0 035 095
EP - A - 0 068 227
DE - A - 2 240 061
DE - A - 2 535 066

(73) Patentinhaber: Upat GmbH & Co, Freiburger Strasse 9 Postfach 1320, D-7830 Emmendingen (DE)

(72) Erfinder: Mermi, Kurt, Breitestrasse 10,
D-7835 Teningen 2 (DE)
Erfinder: Sternisa, Danilo, Ing. grad, Köndringer Weg 13,
D-7830 Emmendingen 15 (DE)
Erfinder: Frischmann, Albert, Hürnheimweg 3,
D-7832 Kenzingen (DE)

(74) Vertreter: Rackette, Karl, Dipl.-Phys. Dr.-Ing,
Kaiser-Joseph-Strasse 179 Postfach 1310,
D-7800 Freiburg (DE)

## Beschreibung

Die Erfindung betrifft einen Ankerbolzen, durch den beim Eindrehen in ein zylindrisches Bohrloch eine konische Hinterschneidung erzeugbar ist, mit einem Anschlussteil, einem Schaftabschnitt und einem Einsteckteil, das einen axial verlaufenden, zwei Spreizschenkel bildenden Schlitz aufweist, in den ein axial verschiebbarer Spreizkeil mit seinem verjüngten Ende hineinragt, und mit wenigstens zwei sich radial gegenüberliegenden Einsätzen an dem vom Schaftabschnitt wegweisenden Ende des Einsteckteils.

Ein solcher Ankerbolzen ist in der früheren europäischen Patentanmeldung EP-A Nr. 68227 der Anmelderin beschrieben und dient gleichzeitig als Befestigungselement sowie Bohrer- bzw. Aufweitwerkzeug. (Diese Anmeldung gehört nach Artikel 54(3) EPü zum Stand der Technik.)

Die Einsätze mit denen ein Abtrag der Bohrlochwandung beim Aufschieben des Einsteckteils über den Spreizkeil erzielt wird, sind bei dem bekannten Ankerbolzen im rechten Winkel zur Längsachse des Ankerbolzens angeordnet und stehen sich diametral gegenüber.

Ausgehend von diesem Stand der Technik liegt der Erfindung die Aufgabe zugrunde, einen Ankerbolzen der eingangs genannten Art zu schaffen, der die Schneidwirkung der Hartmetalleinsätze optimal ausnutzt und einen Hinterschnitt erzeugt, der optimal dem Spreizwinkel am Einsteckende des Ankerbolzens entspricht.

Diese Aufgabe wird erfindungsgemäss dadurch gelöst, dass die Einsätze geneigt gegenüber der Längsachse an der Stirnseite des Einsteckteils angeordnet sind und dass deren in Drehrichtung nach vorne weisende Kanten weiter als die in Drehrichtung nach hinten weisenden Kanten herausragen.

Dadurch, dass die vorderen Schneidkanten weiter herausragen, bewirken diese hauptsächlich den Abtrag von der Bohrlochwandung und erzeugen einen Freiwinkel, der ein Schaben der nach hinten weisenden Kanten verhindert und dadurch zu einem Absinken des Schneidwiderstandes und zu einwandfreiem Abtragen führt.

Die Einsätze sind vorzugsweise zylindrische Hartmetallstifte mit rundem Profil, die in Aufnahmebohrungen angeordnet sind, welche sich mit einem Neigungswinkel von etwa 60° zur Längsachse erstrecken. Bei einem zweckmässigen Ausführungsbeispiel der Erfindung ist die Stirnseite des Einsteckteils als geschlitzter, zweigeteilter Kegelstumpf ausgebildet, aus dessen Kegelflächen die Hartmetallstifte herausragen. Die Hartmetallstifte sind dabei gegenüber einer sich im rechten Winkel zum Schlitz durch die Längsachse des Einsteckteils erstreckenden ersten Ebene in Drehrichtung um einen bestimmten Betrag versetzt angeordnet, wobei die Längsachsen der Hartmetallstifte in einer zweiten bzw. dritten Ebene liegen, die einen Abstand von der ersten Ebene haben, der dem bestimmten Betrag entspricht.

Eine günstige Abnutzung der Schneidkanten ergibt sich, wenn die Hartmetallstifte so in den Aufnahmebohrungen eingeklebt sind, dass sie sich während des Bohrvorganges zur Erstellung der Hinterschneidung um die eigene Achse drehen können.

Die Erfindung wird durch ein Ausführungsbeispiel anhand der Zeichnung näher erläutert. Es zeigen:

Fig. 1 eine Seitenansicht des Ankerbolzens, teilweise im Schnitt,

Fig. 2 eine Draufsicht auf die Stirnseite des Einsteckendes des Ankerbolzens gemäss Fig. 1,

Fig. 3 das vordere Ende des Einsteckteils des Ankerbolzens in einer Seitenansicht, und

Fig. 4 den Bohrlochgrund, geschnitten entlang der Längsrichtung und der Horizontalebene mit dem eingesetzten, bereits erweiterten Einsteckteil in einer schematischen schrägen Ansicht zur Veranschaulichung des Freiwinkels α.

Der insgesamt mit 1 bezeichnete Ankerbolzen besteht im wesentlichen aus einer Gewindestange und verfügt über ein Anschlussteil 2, eine gewindefreie Setztiefenmarkierung 3, einen Schaftabschnitt 4 und ein mit einem Schlitz 6 versehenes Einsteckteil 5. An das Anschlussteil 2 ist ein Aussensechskant 7 angeformt, der als Mitnehmerelement für ein Setzwerkzeug dient.

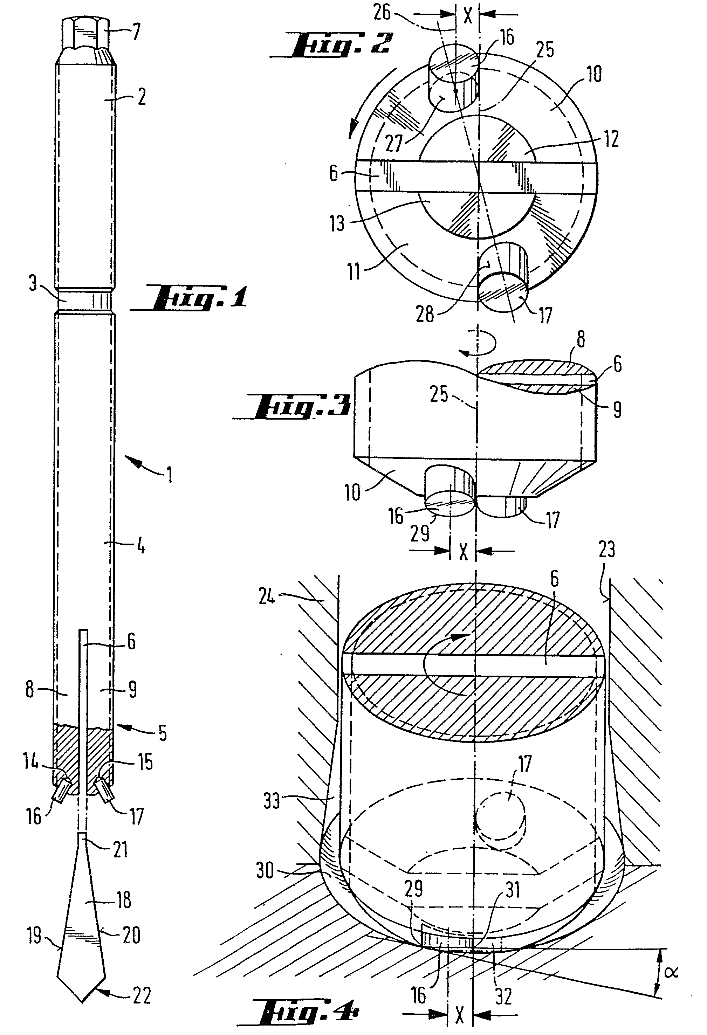

Der Schlitz 6 erstreckt sich vom vorderen Ende des Ankerbolzens 1 ausgehend axial und mittig durch das Einsteckteil 5. Dadurch werden zwei Spreizschenkel 8 und 9 gebildet. Am vorderen Ende weisen die Spreizschenkel 8 und 9, wie insbesondere in den Fig. 1 und 2 dargestellt ist, einen Kegelstumpf auf, der durch den Schlitz 6 in Kegelstumpfabschnitte 10 und 11 mit Deckflächen 12, 13 geteilt ist.

In der Mantelfläche der Kegelstumpfabschnitte 10, 11 sind jeweils Aufnahmebohrungen 14, 15 für zylinderförmige Hartmetallstifte 16, 17 mit einem Neigungswinkel von vorzugsweise 60° vorgesehen.

Dem Schlitz 6 ist ein Spreizkeil 18 mit Keilflächen 19, 20 zugeordnet, die an der Schmalseite in einen Ansatz 21 und an der Breitseite in eine Dachschneide 22 übergehen. Mit Hilfe des Ansatzes 21 kann der Spreizkeil 18 im Schlitz 6 eingeklemmt werden, um dem Verbraucher den Ankerbolzen 1 und den Spreizkeil 18 komplettiert zu liefern. Die Keilflächen 19, 20 des Spreizkeils 18 bilden einen Keilwinkel, der beispielsweise für einen Befestigungsgrund aus Beton 2 bis 4° beträgt.

Als Vorbereitung für den Setzvorgang des Ankerbolzens 1 wird zunächst eine in Fig. 4 teilweise dargestellte zylindrische Bohrung 23 in einen Befestigungsgrund 24 eingebracht. Danach kann eine Kunstharz-Mörtelpatrone in die Bohrung 23 eingeschoben werden, wenn der Ankerbolzen 1 zusätzlich vermörtelt werden soll. Wenn der Ankerbolzen 1 zusammen mit dem im Schlitz 6 eingeklemmten Spreizkeil 18 in die Bohrung 23 unter drehend-schlagender Bewegung und stetigem axialen Druck eingeführt wird, werden die ggf. verwendete Mörtelpatrone zerstört und der Spreizkeil 18 bei Erreichen des Bohrlochgrundes der zylindrischen Bohrung 23 zwischen die Spreizschenkel 8, 9 geschoben, so dass die sich drehenden Hartmetallstifte 16, 17 radial nach aussen gedrückt werden. Dadurch tragen die Hartmetallstifte 16, 17 den Bohrlochrand entsprechend der durch den Spreizkeil 18 bewirkten Spreizung ab. Der Spreizkeil 18 wird im Verlauf der Erzeugung des durch den Materialabtrag bewirkten Hinterschnitts so weit in den Schlitz 6 eingetrieben, bis die maximale Spreizung erreicht ist. Dann ist der beabsichtigte Hinterschnitt erzeugt und eine formschlüssige Verbindung zwischen dem Ankerbolzen 1 und dem hinterschnittenen Bohrloch 33 erreicht.

Um einen wirksamen Abtrag der Bohrlochwandung durch die Hartmetallstifte 16, 17 zu ereichen, sind diese nicht einfach symmetrisch zum Schlitz 6 jeweils mittig auf den Kegelstumpfabschnitten 10 und 11 angeordnet, sondern seitlich versetzt. Die spezielle Anordnung der Hartmetallstifte 16, 17 ist in Fig. 2 dargestellt, wo man eine strichpunktierte Linie 25 erkennt, die eine erste Ebene veranschaulicht, die sich im rechten Winkel zum Schlitz 6 in Längsrichtung des Ankerbolzens 1 erstreckt und den Ankerbolzen 1 in eine rechte und eine linke Hälfte teilt. Die Linie 26 in Fig. 2 veranschaulicht eine zweite Ebene, die in einem Abstand X von der durch die Linie 25 gekennzeichneten Ebene verläuft. Die Aufnahmebohrung 14 und der Hartmetallstift 16 sind so angeordnet, dass die Längsachse des Hartmetallstiftes 16 in der durch die Linie 26 veranschaulichten Ebene liegt. Diese Ebene ist gegenüber der Mittelebene um einen Abstand X versetzt. Der zweite Stift 17 ist auf der anderen Seite der Mittelebene um den gleichen Abstand X versetzt.

Aufgrund der kippfreien Versetzung der Hartmetallstifte 16, 17 um den Abstand X ragen deren Mantelflächen 27, 28 auf der in Richtung der Versetzung weisenden Seite, die der Drehrichtung entspricht, um einen grösseren Betrag aus der Mantelfläche der Kegelstumpfabschnitte 10 und 11 hervor, so dass der in Fig. 4 veranschaulichte Freiwinkel α erhalten wird.

Wie man in Fig. 4 erkennt, berührt der Hartmetallstift 16 den Bohrlochrand 30 lediglich mit dem nach vorne weisenden Rand 29. Der in Drehrichtung nach hinten weisende Rand 31 ist jedoch gegenüber dem Bohrlochrand 30 infolge des Freiwinkels α zurückversetzt, so dass ein einwandfreies Abtragen und ein verringerter Schneidwiderstand gegenüber einer Stiftanordnung 32 erhalten werden, die in Fig. 4 strichpunktiert dargestellt ist.

Der in Fig. 4 strichpunktiert dargestellte Stift 32 entspricht einer symmetrischen Anordnung auf der durch die Linie 25 veranschaulichten Ebene. Wie man in Fig. 4 erkennt, berührt ein solcher Stift 32 den Bohrlochrand 30 sowohl mit seinem vorderen als auch mit seinem hinteren Rand. Der nach hinten weisende Rand erhöht dabei durch Schaben und Drücken in unerwünschter Weise den Schneidwiderstand. Bei der erfindungsgemässen Anordnung berührt jedoch lediglich der nach vorne weisende Rand den Bohrlochrand 30 und kann so die Funktion einer Schneide wirksamer erfüllen.

Fig. 3 zeigt die besondere Anordnung der Hartmetallstifte 16 und 17 perspektivisch in einer Seitenansicht. Anhand dieser Darstellung erkennt man, dass die Aufnahmebohrungen 14, 15 für die Hartmetallstifte 16, 17 einfach in der Weise im Kegelstumpfabschnitt 10 bzw. 11 gebohrt werden können, dass das schräg orientierte Bohrwerkzeug gegenüber der durch die Linie 25 veranschaulichten Mittellängsebene um den Betrag X seitlich verschoben wird.

Die Hartmetallstifte 16, 17 sind in den Aufnahmebohrungen 14, 15 nicht eingepresst, sondern eingeklebt. Durch diese Massnahme wird erreicht, dass die Hartmetallstifte 16, 17 während des Einführens der Ankerstange 1 in die zylindrische Bohrung 23 nicht herausfallen, aber sich während des Aufweitvorganges zur Erzeugung des Hinterschnittes 33 um die eigene Achse drehen können. Dadurch ergibt sich eine gleichmässige Abnutzung der als Schneidkanten wirkenden Berandung der Hartmetallstifte 16 und 17. Da die Ankerstange 1 im aufgeweiteten Bohrloch nach dem Bohrvorgang verbleibt, ist es nicht notwendig, dass die Hartmetallstifte 16, 17 fest in den jeweiligen Aufnahmebohrungen 14, 15 fixiert werden.

### Patentansprüche

1. Ankerbolzen, durch den beim Eindrehen in ein zylindrisches Bohrloch eine konische Hinterschneidung erzeugbar ist, mit einem Anschlussteil (2), einem Schaftabschnitt (4) und einem Einsteckteil (5), das einen axial verlaufenden, zwei Spreizschenkel bildenden Schlitz (6) aufweist, in den ein axial verschiebbarer Spreizkeil (18) mit seinem verjüngten Ende hineinragt, und mit wenigstens zwei sich radial gegenüberliegenden Einsätzen (16, 17) an dem vom Schaftabschnitt wegweisenden Ende des Einsteckteils, dadurch gekennzeichnet, dass die Einsätze (16, 17) geneigt gegenüber der Längsachse an der Stirnseite (10, 11) des Einsteckteils (5) angeordnet sind und dass deren in Drehrichtung nach vorne weisende Kanten (29) weiter als die in Drehrichtung nach hinten weisenden Kanten (31) herausragen.

2. Ankerbolzen nach Anspruch 1, dadurch gekennzeichnet, dass die Einsätze zylindrische Hartmetallstifte (16, 17) mit rundem Profil sind, die in Aufnahmebohrungen (14, 15) eingeklebt sind, welche sich mit einem Neigungswinkel von etwa 60° zur Längsachse erstrecken.

3. Ankerbolzen nach einem der Ansprüche 1 oder 2, dadurch gekennzeichnet, dass die Stirnseite des Einsteckteils (5) als geschlitzter, zweigeteilter Kegelstumpf (10, 11) ausgebildet ist, aus dessen Kegelflächen die Hartmetallstifte (16, 17) herausragen.

4. Ankerbolzen nach einem der vorstehenden Ansprüche, dadurch gekennzeichnet, dass die Hartmetallstifte (16, 17) gegenüber einer sich im rechten Winkel zum Schlitz (6) durch die Längsachse des Einsteckteils (5) erstreckenden ersten Ebene (25) in Drehrichtung um einen Betrag (X) versetzt angeordnet sind und dass die Längsachsen der Hartmetallstifte (16, 17) in einer zweiten bzw. dritten Ebene (26) liegen, die einen Abstand von der ersten Ebene (25) haben, der dem Betrag (X) entspricht.

## Claims

1. A foundation bolt by which upon turning it in a cylindrical borehole a conical undercut may be produced, having a connecting portion (2), a shank section (4) and a plug-in portion (5) which exhibits a slit (6) running axially to form two spreading arms and into which an axially displaceable spreader wedge (18) projects by its thin end, and having at least two inserts (16, 17) lying radially opposite one another at the end of the plug-in portion pointing away from the shank section, characterized in that the inserts (16, 17) are arranged inclined with respect to the longitudinal axis on the endface (10, 11) of the plug-in portion (5) and that the edges (29) of them pointing forwards in the direction of turning project further than the edges (31) pointing backwards in the direction of turning.

2. A foundation bolt as in Claim 1, characterized in that the inserts are cylindrical hard metal pins (16, 17) having a round profile, which are glued into holes (14, 15) drilled to receive them, which extend at an angle of inclination of about 60° to the longitudinal axis.

3. A foundation bolt as in Claim 1 or 2, characterized in that the endface of the plug-in portion (5) is made as a slit two-part truncated cone (10, 11) from the conical faces of which the hard metal pins (16, 17) project.

4. A foundation bolt as in one of the preceding claims, characterized in that the hard metal pins (16, 17) are arranged offset by an amount (X) in the direction of turning with respect to a first plane (25) which extends at right angles to the slit (6) through the longitudinal axis of the plug-in portion (5) and that the longitudinal axes of the hard metal pins (16, 17) lie in second and third planes (26) respectively, which are at distances from the first plane (25) which correspond with the amount (X).

## Revendications

1. Boulon d'ancrage permettant de produire, en l'enfonçant en le faisant tourner dans un trou cylindrique, une contre-dépouille conique, comportant une section de raccordement (2), une section de tige (4) et une section d'introduction (5) qui comporte une fente axiale (6) formant deux branches d'élargissement, dans laquelle un coin d'élargissement (18) mobile axialement pénètre par son extrémité amincie, et comportant au moins deux insertions (16, 17) radialement opposées sur l'extrémité de la section d'introduction opposée à la section de tige, caractérisé en ce que les insertions (16, 17) sont placées dans une position inclinée par rapport à l'axe longitudinal sur la face frontale (10, 11) de la section d'introduction (5), et en ce que leurs arêtes (29) dirigées vers l'avant dans le sens de rotation débordent davantage que les arêtes (31) dirigées vers l'arrière dans le sens de rotation.

2. Boulon d'ancrage selon la revendication 1, caractérisé en ce que les insertions sont des pointes de métal dur (16, 17) cylindriques à profil rond, collées dans des logements ou perçages de positionnement (14, 15), dirigés suivant un angle d'inclinaison d'environ 60° par rapport à l'axe longitudinal.

3. Boulon d'ancrage selon l'une des revendications 1 ou 2, caractérisé en ce que la face frontale de la section d'introduction (5) est réalisée sous la forme d'un tronc de cône fendu en deux parties (10, 11) des surfaces coniques duquel dépassent les pointes de métal dur (16, 17).

4. Boulon d'ancrage selon l'une des revendications précédentes, caractérisé en ce que les pointes de métal dur (16, 17) sont décalées d'une distance (X) dans le sens de rotation par rapport à un premier plan (25) perpendiculaire à la fente (6) et passant par l'axe longitudinal de la section d'introduction (5), et en ce que les axes longitudinaux des pointes métalliques (16, 17) se trouvent dans un second, respectivement troisième, plan (26) situés à une distance du premier plan (25) correspondant à la distance (X).

0 102 914

**Fig. 1**

**Fig. 2**

**Fig. 3**

**Fig. 4**

5